# EUROPÄISCHE PATENTSCHRIFT

(11) **EP 3 476 203 B1**
(45) Veröffentlichungstag und Bekanntmachung des Hinweises auf die Patenterteilung: **29.12.2021**
(21) Anmeldenummer: 17199222.5
(22) Anmeldetag: 30.10.2017
(51) Int. Cl.: A01D 75/30, A01B 73/04

(54) **MÄHEINRICHTUNG**
MOWING DEVICE
DISPOSITIF DE FAUCHAGE

(43) Veröffentlichungstag der Anmeldung: 01.05.2019
(73) Patentinhaber: SIP Strojna Industrija d.d., 3311 Sempeter v Sav.dol. (SI)
(72) Erfinder: Lopan, Damjan, 3304 Tabor (SI); Sekoranja, David, 3000 Celje (SI); Bogataj, Sebastjan, 3303 Gomilsko (SI)
(74) Vertreter: Puschmann Borchert Kaiser Klettner Patentanwälte Partnerschaft mbB

(56) Entgegenhaltungen:
- EP-A1- 3 028 557
- FR-A1- 2 904 182
- US-A- 5 427 182
- US-A- 6 131 378
- US-A1- 2017 172 054

## Beschreibung

Die Erfindung betrifft eine Mäheinrichtung nach dem Oberbegriff des Anspruchs 1 und ein Verfahren zum Betrieb einer Mäheinrichtung gemäß Anspruch 13.

Aus der EP 3 028 557 A1 ist eine Mäheinrichtung bekannt, die einen von Rädern getragenen Zentralrahmen aufweist. Der Zentralrahmen trägt zwei Mäheinheiten, die über je eine Anbindungseinheit an den Zentralrahmen angebunden sind, wobei sich der Zentralrahmen in einer Zentralrahmenrichtung, orthogonal zur Radachse, also in Fahrtrichtung, erstreckt. Eine Anbindungseinheit umfasst einen Hauptschwenkarm und einen Außenschwenkarm, wobei der Außenschwenkarm derart mit dem Hauptschwenkarm verbunden ist, so dass dieser um ein Außenarmgelenk um eine Außenarm-Schwenkachse relativ zum Hauptschwenkarm verschwenkbar ist, ferner umfasst die Anbindungseinheit ein Mäheinheitsgelenk zur Anbindung einer Mäheinheit an den Außenschwenkarm, so dass die Mäheinheit um eine Mäheinheits-Schwenkachse schwenkbar ist. Die Mäheinheits-Schwenkachse ist am von der Außenarm-Schwenkachse beabstandeten

Ende des Außenschwenkarms angeordnet und liegt in etwa 90° zur Außenarm-Schwenkachse. Der Hauptarm ist über ein Hauptarmgelenk an den Zentralrahmen angebunden, das eine Schwenkachse aufweist, die parallel zur Zentralrahmenrichtung liegt.

Diese Anordnung hat den Nachteil, dass eine Schnitthöhenanpassung nur bedingt möglich ist.

Die US 2017/ 0172054 A1 betrifft eine Mäheinrichtung ähnlich der EP 3 028 557 A1, wobei der die Mäheinrichtungen tragende Teil des Zentralrahmens, zusätzlich gegenüber weiteren Teilen des Zentralrahmens verbunden ist.

Einen Ähnlichen Ansatz verfolgt auch die US 6,131,378, bei dem ein Tragelement auslegbare Mäheinheiten trägt, wobei das Tragteil gegenüber der Traktor-Radachse verschwenkbar ist.

Die FR 2 904 182 offenbart eine gezogene Mäheinheit mit einem zentralen und zwei abklappbaren Mäheinheiten, die in ihrer Neigung zur Bodenanpassung anpassbar sind.

Es ist Aufgabe der Erfindung, bei möglichst großer Mähbreite eine flexiblere Anpassung der Schnitthöhe zu erreichen und dennoch ein möglichst geringes Packmaß im Transportzustand zu erreichen.

In bekannter Weise weist eine Mäheinrichtung einen von Rädern getragenen Zentralrahmen auf. Der Zentralrahmen umfasst eine Koppeleinrichtung zum Ankoppeln der Mäheinrichtung an eine Zugmaschine. Der Zentralrahmen trägt wenigstens zwei Mäheinheiten, die über je eine Anbindungseinheit an den Zentralrahmen angebunden sind, wobei sich der Zentralrahmen in einer Zentralrahmenrichtung, orthogonal zur Radachse, also in Fahrtrichtung, erstreckt. Eine Anbindungseinheit umfasst einen Hauptschwenkarm und einen Außenschwenkarm, wobei der Außenschwenkarm derart mit dem Hauptschwenkarm verbunden ist, so dass dieser um ein Außenarmgelenk um eine Außenarm-Schwenkachse relativ zum Hauptschwenkarm verschwenkbar ist, ferner umfasst die Anbindungseinheit ein Mäheinheitsgelenk zur Anbindung einer Mäheinheit an den Außenschwenkarm, so dass die Mäheinheit um eine Mäheinheits-Schwenkachse schwenkbar ist. Die Mäheinheits-Schwenkachse ist am von der Außenarm-Schwenkachse beabstandeten Ende des Außenschwenkarms angeordnet und liegt quer zur Außenarm-Schwenkachse. Quer im Sinne der Erfindung bedeutet eine orthogonale Lage, mit einer Abweichung von 5°, also einen Winkelbereich von 85° bis 95°, insbesondere aber 90°.

Erfindungsgemäß umfasst die Anbindungseinheit ein Hauptelement, das den Zentralrahmen mit dem Hauptschwenkarm verbindet, wobei das Hauptelement um eine horizontale - Hauptelement-Schwenkachse, die orthogonal zur insbesondere ebenfalls horizontal liegenden Zentralrahmenrichtung liegt, gegenüber dem Zentralrahmen schwenkbar ist. Die Hauptelement-Schwenkachse liegt damit parallel zur Radachse. Ferner ist der Hauptschwenkarm über ein Hauptarmgelenk mit dem Hauptelement derart verschwenkbar verbunden, so dass dieser um eine Hauptarm-Schwenkachse am Hauptelement schwenkbar gelagert ist, wobei die Hauptarm-Schwenkachse quer zur Hauptelement-Schwenkachse liegt. Die Hauptarm-Schwenkachse liegt bevorzugt quer zur Hauptelement-Schwenkachse und quer zur Außenarm-Schwenkachse, wobei ferner die Außenarm-Schwenkachse quer zur Hauptelement-Schwenkachse liegt.

So ergibt sich in der Arbeitsposition eine etwa vertikale Lage der Außenarm-Schwenkachse und eine horizontale Lage für die Hauptarm-Schwenkachse und Hauptelement-Schwenkachse.

Durch die Anbindung über ein solches Hauptelement, kann der Abstand des vorderen Endes der Mäheinheit zum Boden und dadurch die Schnitthöhe sehr genau und auf einfache Weise eingestellt werden.

Bevorzugt sind zwei erste Anbindungseinheiten gegenüberliegend am Zentralrahmen angebunden. Dies sorgt für eine symmetrische Verteilung der Arbeitslast.

Gemäß einer weiteren vorteilhaften Ausgestaltung können so die zwei ersten Anbindungseinheiten ein gemeinsames Hauptelement umfassen, oder es können zwei Hauptelemente der beiden ersten Anbindungseinheiten mechanisch gekoppelt sein. Dadurch kann auf einfache Weise sichergestellt werden, dass die beiden Mäheinheiten synchron in ihrer Schnitthöhe eingestellt werden können.

Gemäß einer weiteren Ausgestaltung kann vorgesehen sein, dass die Breite der Mäheinheit kleiner als die doppelte Länge des Außenschwenkarms der ersten Anbindungseinheit ist.

Dadurch wird sichergestellt, dass die Mäheinheit bei mittiger Aufhängung an dem Außenschwenkarm nicht über das Außenarmgelenk hinausragt. Dies wirkt sich insbesondere auf die Lage in der Transportposition aus.

Gemäß einer besonders bevorzugten Ausgestaltung ist vorgesehen, dass zwei erste Mäheinheiten über zwei erste Anbindungseinheiten mit dem Zentralrahmen verbunden sind, und dass zwei weitere Mäheinheiten vorgesehen sind, die über zwei gegenüberliegende zweite Anbindungseinheiten mit dem Zentralrahmen verbunden sind, wobei die zweite Anbindungseinheit einen Hauptschwenkarm umfasst, der über eine in bzw. parallel zur Zentralrahmenrichtung verlaufende Schwenkachse, um die Mäheinheit schwenkbar ist. Insbesondere umfasst eine Mäheinheit einen Mähbalken.

Gemäß einer weiteren vorteilhaften Ausgestaltung kann vorgesehen sein, dass in einem hinteren Abschnitt des Zentralrahmens, zwei hintere Mäheinheiten über zwei erste Anbindungseinheiten insbesondere gegenüberliegend mit dem Zentralrahmen verbunden sind und ferner in Zentralrahmenrichtung vor den hinteren Mäheinheiten zwei vordere Mäheinheiten über je eine zweite Anbindungseinheit insbesondere gegenüberliegend mit dem Zentralrahmen verbunden sind.

Bevorzugt kann die zweite Anbindungseinheit ein Hauptelement umfassen, das über ein Hauptelementgelenk an den Zentralrahmen angebunden ist, wobei das Hauptelement um eine Hauptelement-Schwenkachse orthogonal zur Zentralrahmenrichtung insbesondere parallel zur Radachse liegt, so dass der Außenschwenkarm um die Hauptelement-Schwenkachse mitgeschwenkt werden kann.

Auch bei der zweiten Anbindungseinheit ist es vorteilhaft, wenn zwei am Zentralrahmen gegenüberliegende erste Anbindungseinheiten vorgesehen sind, dass die Hauptelemente der ersten Anbindungseinheiten ein gemeinsames Hauptelement bilden, wobei beide Außenschwenkarme mit dem zentralen Hauptelement verbunden sind.

Vorzugsweise kann der Abstand zwischen der Hauptelement-Schwenkachse der ersten Anbindungseinrichtung und der Hauptelement-Schwenkachse der zweiten Anbindungseinrichtung größer als die Länge des Hauptarms sein. Dadurch ist sichergestellt, dass eine Kollision der Anbindungseinrichtung im Transportzustand vermieden wird. Sind tiefere Mäheinheiten vorgesehen, so kann der Abstand der Hauptelement-Schwenkachsen beispielsweise der Summe der Länge des Hauptschwenkarms der ersten Anbindungseinheit und der halben Tiefe der vorderen Mäheinheit entsprechen.

Gemäß einer weiteren bevorzugten Ausgestaltung kann ein Schwenkantrieb des Hauptelements der ersten Anbindungseinheit über zwei hintereinanderliegende Hydraulikzylinder, die mit dem Zentralrahmen verbunden sind, realisiert sein. So kann ein stufiges Schwenken des Hauptelements der ersten Anbindungseinheit ermöglicht werden. So kann über den ersten Zylinder die Schnitthöhe eingestellt werden und über den zweiten Zylinder das Hauptelement zwischen einer Transport- und einer Arbeitsstellung gekippt werden. Die zwei Zylinder können auch in einem Zylinder baulich realisiert sein.

Bevorzugt können das Hauptelement des ersten Anbindungselements und das Hauptelement des zweiten Anbindungselements mechanisch so verbunden sein, dass die Hauptelemente gemeinsam geschwenkt werden. So können beide Hauptelemente mit dem ersten Hydraulikzylinder verbunden sein.

Insbesondere liegen die Räder, die den Zentralrahmen tragen, zwischen den ersten Anbindungseinheiten und zweiten Anbindungseinheiten. Hier bietet sich eine Lage an, in der die Radachse möglichst nah an der ersten Hauptelementschwenkachse liegt.

Ferner betrifft die Erfindung ein Verfahren zum Überführen einer landwirtschaftlichen Maschine von einer Arbeitsstellung in eine Transportstellung und umgekehrt.

In der Arbeitsstellung liegen die ersten Mäheinheiten, die über je eine erste Anbindungseinheit mit dem Zentralrahmen verbunden sind in Bodennähe, wobei die Mäheinheits-Schwenkachse, als auch die Hauptarm-Schwenkachse in etwa parallel zur Zentralrahmenrichtung liegt und der Hauptschwenkarm einen Winkel von weniger als 10° mit der Horizontalen einschließt.

Zuerst wird der Hauptschwenkarm um die Hauptarm-Schwenkachse nach oben geschwenkt. Der zurückgelegte Schwenkwinkel beträgt dabei zwischen 10° und 20°. Dadurch werden die Mäheinheiten vom Boden abgehoben und gewinnen so eine gewisse Bodenfreiheit. Diese Bodenfreiheit wird auch beim Wenden während des Mähvorgangs oder beim Übergang in eine neue Spur angewendet.

Anschließend wird das Hauptelement um die Hauptelement-Schwenkachse zwischen 10° und 20°, insbesondere 15°, nach vorne geschwenkt. Dadurch erlangen die ersten Mäheinheiten weitere Bodenfreiheit. Liegt das Hauptelement hinter den Rädern, ist der Schwenkwinkel nach vorne dadurch begrenzt, dass die Mäheinheit bei Einschwenken des Hauptschwenkarms über das Rad geschwenkt werden können muss, ohne dass eine Kollision der Mäheinheit mit dem Rad erfolgt.

Nachfolgend wird der Außenschwenkarm mit der Mäheinheit um die Außenschwenkachse nach hinten um 120° bis 150°, insbesondere 140°, gedreht. Da die Länge des Hauptschwenkarms bevorzugt wenigstens der Breite der Mäheinheit entspricht, kann bei einer symmetrischen Anordnung von zwei gegenüberliegenden ersten Anbindungseinheiten der Klappvorgang erfolgen, ohne dass die beiden Mäheinheiten kollidieren.

In der zurückgeschwenkten Position können dann die Mäheinheiten arretiert werden.

Anschließend werden die Hauptschwenkarme um die Hauptarm-Schwenkachse nach oben geschwenkt, bis diese etwa einen Winkel von 75° bis 85° gegenüber der Hauptelement-Schwenkachse erreicht haben. Für den Fall einer symmetrischen Anordnung liegen dann die beiden Hauptschwenkarme leicht zueinander geneigt. Dies entspricht einer Schwenkbewegung von etwa 90°.

Danach wird das Hauptelement nach vorne geschwenkt, bis es auf einem Fixierungselement, das den Hauptelement-Schwenkarm in seiner Transportlage fixiert, zu liegen kommt. Die Transportlage liegt bei einem Winkel des Hauptschwenkarms gegenüber der Zentralrahmenrichtung von etwa 60 ° bis 20°. Dabei kann ein ausreichender Abstand der Mäheinheit zum Rad eingehalten werden.

Für den Fall, dass noch eine zweite Mäheinheit, wie zuvor beschrieben, vor der ersten Mäheinheit vorhanden ist, kann diese einfach um etwa 90° nach oben geklappt werden. Dieser Schritt kann vor, während oder nach dem Zusammenklappen der ersten Anbindungseinrichtungen erfolgen.

Ein Überführen der Maschine von einer Transport- in eine Arbeitsstellung erfolgt in umgekehrter Reihenfolge.

Weitere Vorteile, Merkmale und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen und in der Zeichnung werden die in der unten aufgeführten Liste der Bezugszeichen verwendeten Begriffe und zugeordneten Bezugszeichen verwendet. In der Zeichnung bedeutet:
- Fig. 1: eine perspektivische Ansicht einer erfindungsgemäßen Mäheinrichtung in Arbeitsstellung;
- Fig. 2: eine perspektivische Ansicht der Mäheinrichtung gemäß Fig. 1 in einer Position nach einer ersten Schwenkbewegung;
- Fig. 3: eine perspektivische Ansicht der Mäheinrichtung gemäß Fig. 1 in einer Position nach einer weiteren Schwenkbewegung;
- Fig. 4: eine perspektivische Ansicht der Mäheinrichtung gemäß Fig. 1 in einer Position mit arretierten Außenschwenkarmen ;
- Fig. 5: eine Seitenansicht der Mäheinrichtung gemäß Fig. 1 in einer Position nach Zusammenklappen der Hauptschwenkarme
- Fig. 6a: eine Seitenansicht der Mäheinrichtung gemäß Fig. 1 in Transportposition
- Fig. 6b: eine rückwärtige Ansicht der Mäheinrichtung gemäß Fig. 1 in Transportposition, und
- Fig. 7: eine Detailansicht der Schwenkanordnung der Hauptelemente.

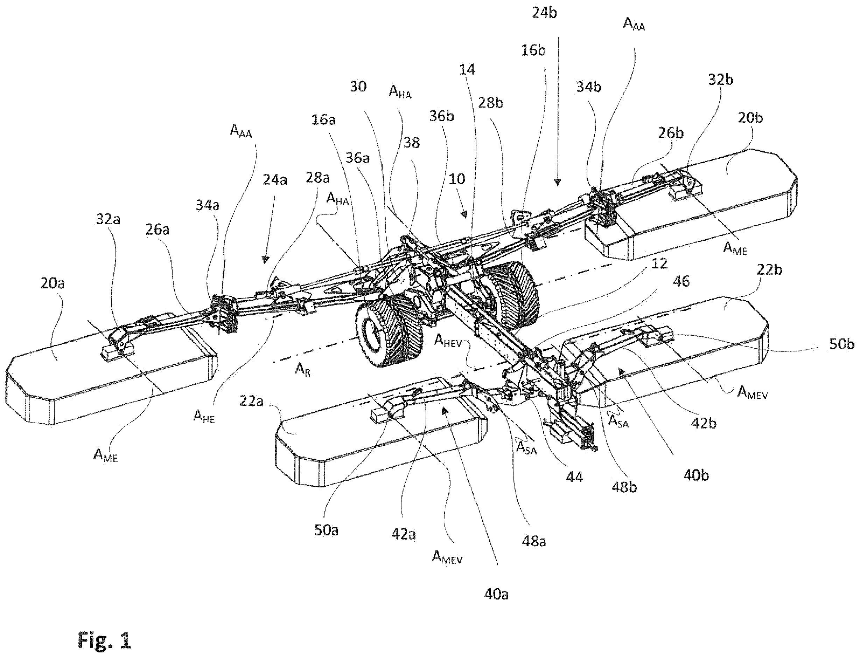

Fig. 1 zeigt eine erfindungsgemäße Mäheinrichtung 10 in einer perspektivischen Ansicht. Die Mäheinrichtung umfasst einen Zentralrahmen 12, der von einer Radachse 14 mit zwei Rädern 16a, 16b getragen wird. Die Mäheinrichtung 10 umfasst zwei erste Mäheinheiten 20a, 20b und zwei zweite Mäheinheiten 22a, 22b, wobei die ersten Mäheinheiten in Fahrtrichtung hinter den zweiten Mäheinheiten angeordnet sind.

Die ersten Mäheinheiten 20a, 20b sind je über eine erste Anbindungseinrichtung 24a, 24b mit dem Zentralrahmen 12 verbunden. Die erste Anbindungseinrichtung 24a, 24b umfasst je einen Außenschwenkarm 26a, 26b, einen Hauptschwenkarm 28a, 28b, und ein erstes Hauptelement 30, wobei das erste Hauptelement 30 als gemeinsames Hauptelement in beiden Anbindungseinrichtungen 24a, 24b dient.

Die ersten Mäheinheiten 22a, 22b sind über ein Mäheinheitsgelenk 32a, 32b an den Außenschwenkarm 26a, 26b angebunden und der Außenschwenkarm 26a, 26b ist über ein Außenarmgelenk 34a, 34b an den Hauptschwenkarm 28a, 28b angebunden. Der Hauptschwenkarm 28a, 28b ist wiederum über ein Hauptarmgelenk 36a, 36b an das erste Hauptelement 30 angebunden. Das erste Hauptelement 30 ist über ein Hauptelementgelenk 38 schwenkbar am Zentralrahmen 12 angebunden.

Das Hauptelementgelenk 38 ist derart gestaltet, dass es eine erste Hauptelement-Schwenkachse A_{HE} definiert, die parallel zur Radachse A_{R} liegt. Das Hauptarmgelenk 36a, 36b ist derart gestaltet, dass es eine Hauptarm-Schwenkachse A_{HA} definiert, die orthogonal zur ersten Hauptelement-Schwenkachse A_{HE} liegt, also in einer Ebene liegt deren Normale die erste Hauptelement-Schwenkachse A_{HE} ist.

Das Außenarmgelenk 34a, 34b ist so gestaltet, dass es eine Außenarm-Schwenkachse A_{AA} definiert. Die Außenarm-Schwenkachse A_{AA} liegt dabei quer, insbesondere orthogonal, zur Hauptarm-Schwenkachse A_{HA}.

Das Mäheinheitsgelenk 32a, 32b ist derart gestaltet, dass es eine erste Mäheinheitsschwenkachse A_{ME} definiert, die parallel zur Hauptarm-Schwenkachse A_{HA} liegt.

Die zweiten Mäheinheiten 22a, 22b sind je über eine zweite Anbindungseinheit 40a, 40b mit dem Zentralrahmen 12 verbunden. Die zweite Anbindungseinheit umfasst je einen Seitenschwenkarm 42a, 42b, und ein gemeinsames zweites Hauptelement 44.

Das zweite Hauptelement 44 ist über ein zweites Hauptelementgelenk 46 schwenkbar mit dem Zentralrahmen 12 verbunden. Der Seitenschwenkarm 42a, 42b ist über ein Seitenarmgelenk 48a, 48b mit dem Hauptelement 44 verbunden. Der Seitenschwenkarm 42a, 42b ist ferner über ein Mäheinheitsgelenk 50a, 50b mit der zweiten Mäheinheit 22a, 22b verbunden.

Das zweite Hauptelementgelenk 46 ist derart gestaltet, dass es eine zweite Hauptelement-Schwenkachse A_{HEV} definiert, die parallel zur Radachse A_{R} liegt und damit parallel zur ersten Hauptelement-Schwenkachse A_{HE}. Das Seitenarmgelenk 48a, 48b ist derart gestaltet, dass es eine Seitenarm-Schwenkachse A_{SA} definiert. Die Seitenarm-Schwenkachse A_{SA} liegt quer, insbesondere orthogonal, zur zweiten Hauptelement-Schwenkachse A_{HEV}. Das Mäheinheitsgelenk 50a, 50b ist derart gestaltet, dass es eine zweite Mäheinheits-Schwenkachse A_{MEV} definiert, die parallel zur Seitenarm-Schwenkachse A_{SA} liegt.

In der in der Fig. 1 dargestellten Arbeitsstellung liegen die zweiten Mäheinheits-Schwenkachsen A_{MEV} parallel zu den vorderen Mäheinheits-Schwenkachsen A_{ME}.

Durch Schwenken des ersten Hauptelements 30 um die Hauptelement-Schwenkachse A_{HE} und des zweiten Hauptelements 44 um die Hauptelement-Schwenkachse A_{HEV} werden aufgrund der Ausgestaltung der Anbindungseinheiten 24a, 24b; 40a, 40b die Mäheinheiten 20a, 20b; 22a, 22b im selben Winkel mitgeschwenkt, wodurch eine ideale Anpassung an die Schnitthöhe erfolgen kann.

Das erste Hauptelement 30 und das zweite Hauptelement 44 sind mechanisch verbunden, so dass ein synchrones Verschwenken der beiden Mäheinheitspaare erfolgen kann.

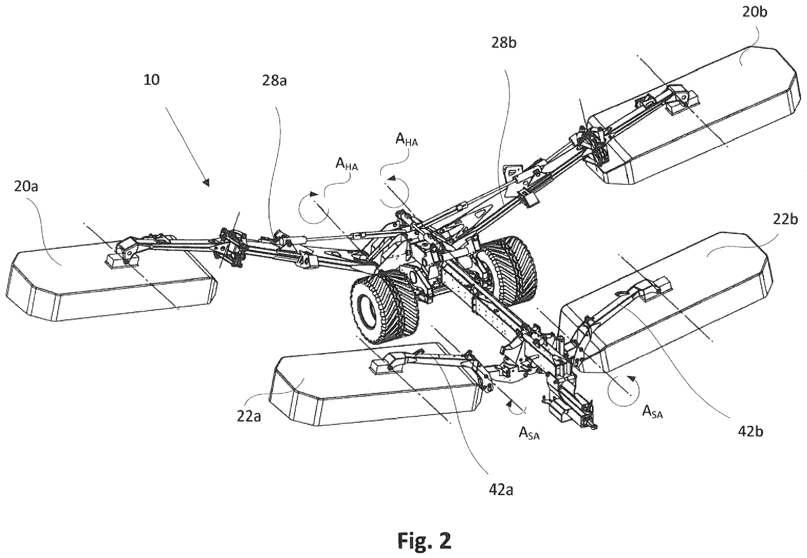

Fig. 2 zeigt eine perspektivische Ansicht der erfindungsgemäßen Mäheinrichtung 10 in einer Vorgewende-Stellung nach einer ersten Schwenkbewegung des Zusammenklappvorgangs, also der

Überführung in die Transportstellung. So werden in einer ersten Schwenkbewegung aus der Arbeitsposition sowohl die Hauptschwenkarme 28a, 28b der ersten Anbindungseinheiten 24a, 24b um etwa 15° um die Hauptarm-Schwenkachse A_{HA}, als auch die Seitenarme 42a, 42b der zweiten Anbindungseinheiten 40a, 40b um die Seitenarm-Schwenkachsen A_{SA} um etwa 15° nach oben geschwenkt. Dadurch erlangen die Mäheinheiten 20a, 20b; 22a, 22b eine Bodenfreiheit.

Die Hauptelemente 30, 44 der ersten Anbindungseinheiten 24a, 24b und der zweiten Anbindungseinheiten 40a, 40b sind dabei in ihrer Ursprungsstellung bei einem Schwenkwinkel von 0°, bei dem die Hauptarm-Schwenkachse A_{HA} als auch die Seitenarm-Schwenkachsen A_{SA} horizontal liegen.

Dieser Schwenkzustand kann auch bei Wendemanövern oder Fahrspurwechseln eingenommen werden, um den Mähvorgang kurzzeitig zu unterbrechen. Die Mäheinheiten 20a, 20b, 22a, 22b sind während dieses Vorgangs hydraulisch arretiert.

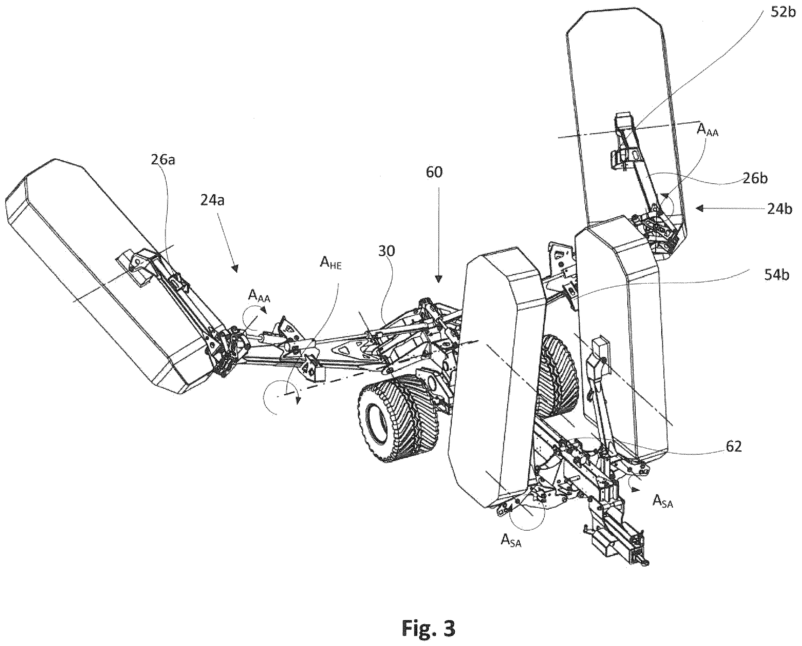

Fig. 3 zeigt eine perspektivische Ansicht der erfindungsgemäßen Mäheinrichtung 10 in einer nächsten Position während des Zusammenklappvorgangs.

Das erste Hauptelement 30 der ersten Anbindungseinheiten 24a, 24b wurde um etwa 15° um die Hauptelements-Schwenkachse A_{HE} nach vorne geschwenkt, so dass die Mäheinheiten 20a, 20b weitere Bodenfreiheit gewinnen. Der Schwenkvorgang nach vorne erfolgt über einen zweiteiligen Hydraulikzylinder 60. Diese Schwenkbewegung kann daher unabhängig von einer Schwenkbewegung des zweiten Hauptelements 44 erfolgen, obwohl das erste Hauptelement 30 der ersten Anbindungseinheit und das zweite Hauptelement 44 der zweiten Anbindungseinheiten über einen Zylinder 62 gemeinsam neigbar sind, wodurch eine Höheneinstellung der Mäheinheiten realisiert werden kann.

Ferner wurde dann der Außenschwenkarm 26a, 26b in der dargestellten Position um die Außenarm-Schwenkachse A_{AA} um etwa 80° geschwenkt. Die Endlage dieses Schwenkvorgangs um die Außenarm-Schwenkachse A_{AA} liegt bei etwa 130°, so dass sich die Mäheinheiten 20a, 20b fast berühren und der Außenschwenkarm 26a, 26b und der Hauptschwenkarm 28a, 28b einen Winkel am Außenarmgelenk von etwa 50° einschließen.

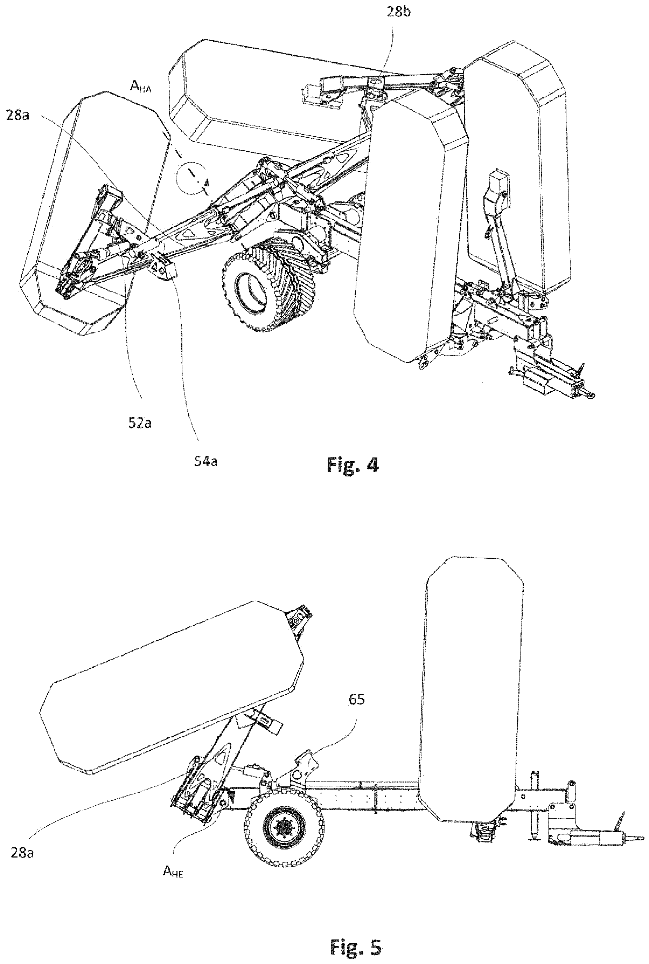

Diese Endlage ist in Fig. 4 dargestellt. In dieser Lage wurden die Mäheinheiten 20a, 20b um etwa 140° um die Außenarm-Schwenkachse A_{AA} nach hinten geschwenkt. In dieser Lage werden die Außenschwenkarme über Arretierzapfen 52a, 52b gegenüber den Hauptschwenkarmen 28a, 28b arretiert.

Ferner wird anschließend ein weiterer Schwenkvorgang des Hauptschwenkarms 28a, 28b um die Hauptarmschwenkachse A_{HA} um einen Winkel von etwa 90° ausgeführt, so dass die Hauptschwenkarme 28a, 28b leicht nach innen zum Zentralrahmen hin geneigt sind. Die ersten Mäheinheiten 20a, 20b liegen entsprechend ebenfalls leicht nach innen geneigt in ihrer Transportstellung.

Diese Lage ist in Seitenansicht der Fig. 5 zu entnehmen, wobei der Überführungsvorgang von der Arbeitsstellung in die Transportstellung dadurch abgeschlossen wird, dass die wie zuvor beschrieben eingeklappten Hauptschwenkarme 28a, 28b, durch eine Schwenkbewegung des ersten Hauptelements 30 um etwa 50° nach vorne auf Stützarmen 65 zu liegen kommen und in ihrer Transportposition mit Hilfe von Arretierzapfen 54a, 54b arretiert werden.

Die Seitenarme 42a, 42b werden nochmals um die Seitenarm-Schwenkachsen A_{SA} um etwa 90° nach oben geschwenkt, so dass diese leicht zur Rahmenmitte geneigt ihre Endlage erreichen, in der sie in ihrer Transportstellung arretiert werden.

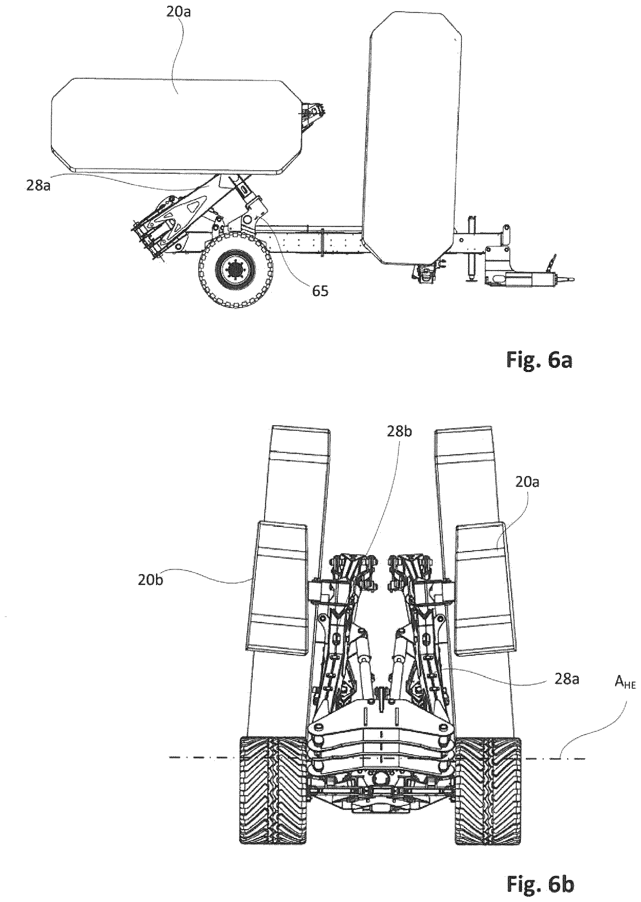

Fig. 6a und Fig. 6b zeigen die Mäheinrichtung 10 in Transportstellung, wobei Fig. 6a eine Seitenansicht und Fig. 6b eine rückwärtige Ansicht zeigt.

Dadurch ist eine kompakte Transportposition geschaffen.

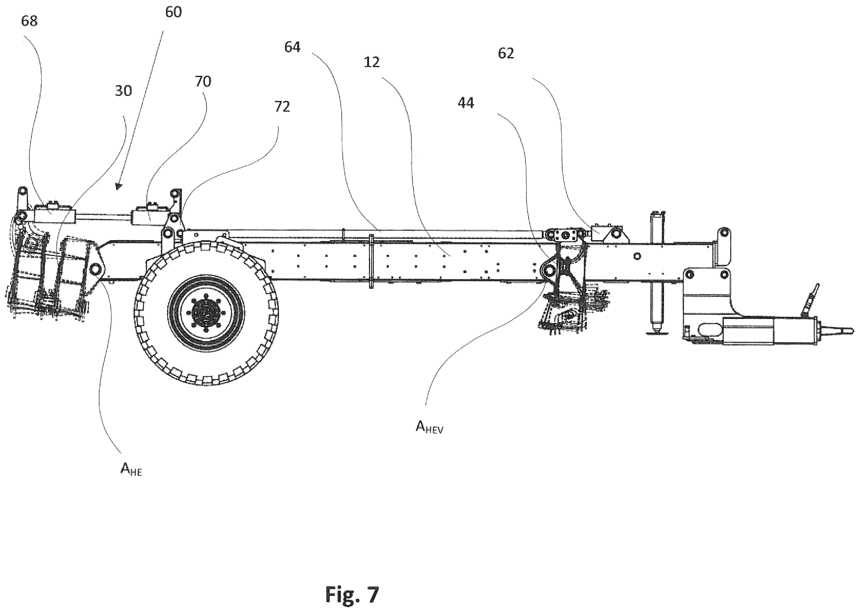

Fig. 7 zeigt in einer Detailansicht dir Anordnung zur Schnitthöheneinstellung. So ist hinter der Radachse das Hauptelement 30 der ersten Anbindungseinheit angeordnet, das um die Hauptelement-Schwenkachse A_{HE} schwenkbar ist. Vor der Radachse ist das Hauptelement 44 der zweiten Anbindungseinheit angeordnet, das um die vordere Hauptelement-Schwenkachse A_{HEV} schwenkbar gelagert ist. Beabstandet zur Hauptelement-Schwenkachse A_{HE} des Hauptelements 30 greifen zwei seriell geschaltete Zylinder 68, 70 am Hauptelement 30 und über ein Lager 72 am Zentralrahmen 12 an. Die serielle Anordnung der Zylinder 68, 70 ist im vorliegenden Fall so realisiert, dass die Kolbenstange der beiden Zylinder 68,70 baueinheitlich ausgeführt ist und auf diese Weise ein zweiteiliger Hydraulikzylinder 60 geschaffen ist, der bei entsprechender Druckbeaufschlagung zwei definierte Schwenkzustände bzw. Schenkwinkel zuverlässig realisiert. Über das Lager 72 ist das Hauptelement 30 auch mit dem vorderen Hauptelement 44 durch eine Stange 64 verbunden. Diese Stange 64 wird von einem Zylinder 62, der mit dem Zentralrahmen 12 verbunden ist betätigt, so dass sich bei Betätigung derselbe Neigungswinkel für das Hauptelement 30 der ersten Anbindungseinheit und für das Hauptelement der zweiten Anbindungseinheit und folglich für die entsprechenden Mäheinheiten ergibt.

### Bezugszeichenliste

- 10: Mäheinrichtung
- 12: Zentralrahmen
- 14: Radachse
- 16a, 16b: Räder
- 20a, 20b: zwei erste Mäheinheiten
- 22a, 22b: zwei zweite Mäheinheiten
- 24a, 24b: erste Anbindungseinheit
- 26a, 26b: Außenschwenkarm
- 28a, 28b: Hauptschwenkarm
- 30: erstes Hauptelement
- 32a, 32b: Mäheinheitsgelenk
- 34a, 34b: Außenarmgelenk
- 36a, 36b: Hauptarmgelenk
- 38: Hauptelementgelenk
- 40a, 40b: zweite Anbindungseinheit
- 42a, 42b: Seitenschwenkarm
- 44: zweites Hauptelement
- 46: zweites Hauptelementgelenk
- 48a, 48b: Seitenarmgelenk
- 50a, 50b: Mäheinheitsgelenk
- 52a, 52b: Arretierzapfen
- 54a, 54b: Arretierzapfen
- 60: zweiteiliger Hydraulikzylinder
- 62: Zylinder
- 64: Stange
- 65: Stützarm
- 68: Zylinder
- 70: Zylinder
- 72: Lager
- A_{HE}: erste Hauptelement-Schwenkachse
- A_{HA}: Hauptarm-Schwenkachse
- A_{AA}: Außenarm-Schwenkachse
- A_{ME}: erste Mäheinheits-Schwenkachse
- A_{HEV}: zweite Hauptelement-Schwenkachse
- A_{R}: Radachse
- A_{SA}: Seitenarm-Schwenkachse
- A_{MEV}: zweite Mäheinheits-Schwenkachse

## Patentansprüche

1. Mäheinrichtung (10), umfassend einen von Rädern (16a, 16b) getragenen Zentralrahmen über den eine Zugmaschine angekoppelt werden kann, wobei der Zentralrahmen wenigstens zwei Mäheinheiten (20a, 20b) trägt, die über je eine Anbindungseinheit (24a, 24b) an den Zentralrahmen (12) angelenkt sind, wobei sich der Zentralrahmen (12) in seiner Längsrichtung, also einer Zentralrahmenrichtung, orthogonal zur Radachse, also in Fahrtrichtung, erstreckt, wobei eine Anbindungseinheit (24a, 24b) einen Hauptschwenkarm (28a, 28b) und einen Außenschwenkarm (26a, 26b) umfasst, wobei der Außenschwenkarm (26a, 26b) derart mit dem Hauptschwenkarm (28a, 28b) verbunden ist, dass dieser um ein Außenarmgelenk (34a, 34b), das eine Außenarm-Schwenkachse (A_{AA}) definiert, relativ zum Hauptschwenkarm (28a, 28b) verschwenkbar ist, ferner umfasst die Anbindungseinheit (24a, 24b) ein Mäheinheitsgelenk (32a, 32b) zur Anbindung der Mäheinheit (20a, 20b) an den Außenschwenkarm (26a, 26b), wobei das Mäheinheitsgelenk (32a, 32b) an dem vom Außenarmgelenk (34a, 34b) beabstandeten Ende des Außenschwenkarms (26a, 26b) angeordnet ist, wobei das Mäheinheitsgelenk (32a, 32b) eine Mäheinheits-Schwenkachse definiert, wobei die Mäheinheits-Schwenkachse (A_{ME}) quer zur Außenarm-Schwenkachse (A_{AA}) liegt, **dadurch gekennzeichnet, dass** die Anbindungseinheit (24a, 24b) ein Hauptelement (30) umfasst, das den Zentralrahmen (12) mit dem Hauptschwenkarm (28a, 28b) verbindet, wobei das Hauptelement (30) über ein Hauptelementgelenk, das eine Hauptelement-Schwenkachse definiert, mit dem Zentralrahmen (12) verbunden ist, wobei die Hauptelement-Schwenkachse (A_{HE}) parallel zur Radachse liegt, wobei das Hauptelement (30) den Hauptschwenkarm (28a, 28b) derart verschwenkbar mit dem Zentralrahmen (12) verbindet, dass der Hauptschwenkarm (28a,28b) um eine Hauptarm-Schwenkachse (A_{HA}) am Hauptelement (30) schwenkbar gelagert ist, so dass die Hauptarm-Schwenkachse (A_{HA}) quer zur Hauptelement-Schwenkachse (A_{HE}) und quer zur Außenarm-Schwenkachse (A_{AA}) liegt, wobei die Außenarm-Schwenkachse (A_{AA}) auch quer zur Hauptarm-Schwenkachse (A_{HA}) liegt.

2. Mäheinrichtung nach Anspruch 1, **dadurch gekennzeichnet, dass** zwei erste Anbindungseinheiten (24a, 24b) gegenüberliegend beidseitig am Zentralrahmen (12) angebunden sind.

3. Mäheinrichtung nach Anspruch 2, **dadurch gekennzeichnet, dass** die zwei ersten Anbindungseinheiten ein gemeinsames Hauptelement umfassen oder zwei Hauptelemente der beiden ersten Anbindungseinheiten gekoppelt sind.

4. Mäheinrichtung nach Anspruch 1, **dadurch gekennzeichnet, dass** die Breite der Mäheinheit (20a, 20b) kleiner als die doppelte Länge des Außenschwenkarms (26a, 26b) der ersten Anbindungseinheit ist.

5. Mäheinrichtung nach Anspruch 2, **dadurch gekennzeichnet, dass** zwei erste Mäheinheiten vorgesehen sind, die über zwei erste Anbindungseinheiten mit dem Zentralrahmen verbunden sind, und dass zwei zweite Mäheinheiten vorgesehen sind, die über zwei gegenüberliegende zweite Anbindungseinheiten (40a, 40b) mit dem Zentralrahmen verbunden sind, wobei die zweite Anbindungseinheit einen Seitenschwenkarm (42a, 42b) umfasst, der über ein Mäheinheitsgelenk mit der um eine quer zur Radachse (A_{R}) verlaufenden Mäheinheits-Schwenkachse (A_{MEV}) gegenüber dem Seitenschwenkarm verschwenkbaren zweiten Mäheinheit verbunden ist.

6. Mäheinrichtung nach Anspruch 5, **dadurch gekennzeichnet, dass** in einem hinteren Abschnitt des Zentralrahmens (12) zwei hintere erste Mäheinheiten (20a, 20b) über zwei erste Anbindungseinheiten mit dem Zentralrahmen (12) verbunden sind, wobei vor den hinteren Mäheinheiten zwei vordere zweite Mäheinheiten über je eine zweite Anbindungseinheit mit dem Zentralrahmen verbunden sind.

7. Mäheinrichtung nach Anspruch 5 oder 6, **dadurch gekennzeichnet, dass** die zweite Anbindungseinheit ein Hauptelement und einen Seitenschwenkarm umfasst, wobei das Hauptelement über ein Hauptelement-Gelenk an den Zentralrahmen angebunden ist, das eine Hauptelement-Schwenkachse parallel zur Radachse aufweist und der Seitenarm über ein Seitenarmgelenk an das Hauptelement angebunden ist, wobei das Seitenarmgelenk eine Schwenkachse definiert, die quer zur Radachse (A_{R}) liegt.

8. Mäheinrichtung nach einem der vorangehenden Ansprüche 5 bis 7, **dadurch gekennzeichnet, dass** der Abstand zwischen der Hauptelement-Schwenkachse (A_{HE}) der ersten Anbindungseinheit und der Hauptelement-Schwenkachse (A_{HEV}) der zweiten Anbindungseinheit größer als die Länge des Hauptarms (28a, 28b) ist.

9. Mäheinrichtung nach einem der vorangehenden Ansprüche, **dadurch gekennzeichnet, dass** das Hauptelement (30) der ersten Anbindungseinheit (24a, 24b) über wenigstens einen Zylinder, insbesondere zwei Zylinder, oder einen zweifachen Hydraulikzylinder mit dem Zentralrahmen (12) verbunden ist, so dass ein wenigstens zweistufiges Schwenken des Hauptelements möglich ist.

10. Mäheinrichtung nach einem der Ansprüche 5 bis 9, **dadurch gekennzeichnet, dass** die Räder, die den Zentralrahmen tragen, zwischen den ersten Anbindungseinheiten und zweiten Anbindungseinheiten liegen.

11. Mäheinrichtung nach einem der vorangehenden Ansprüche 2 bis 10, **dadurch gekennzeichnet, dass** das Hauptelement (30) der ersten Anbindungseinheit über einen zweiten Zylinder mit dem Zentralrahmen verbunden ist, so dass eine Neigung des Hauptelements zur Anpassung der Schnitthöhe ermöglicht wird.

12. Mäheinrichtung nach einem der vorangehenden Ansprüche 5 bis 11, **dadurch gekennzeichnet, dass** das Hauptelement des ersten Anbindungselements derart mit dem zweiten Hauptelement des zweiten Anbindungselements verbunden ist, dass die Hauptelemente gemeinsam geschwenkt werden, insbesondere durch einen zweiten Zylinder.

13. Verfahren zum Überführen einer Mäheinrichtung nach einem der vorangehenden Ansprüche 1 bis 12 von einer Arbeitsstellung in eine Transportstellung, umfassend folgende Schritte:
Schwenken des Hauptschwenkarms (28a, 28b) um die Hauptarm-Schwenkachse nach oben um einen Schwenkwinkel zwischen 10° und 20°; Schwenken des Hauptelements (30) um die Hauptelement-Schwenkachse um einen Schwenkwinkel zwischen 10° und 20°, insbesondere 15°, nach vorne; Schwenken des Außenschwenkarms (26a, 26b) mit der Mäheinheit (20a, 20b) um die Außenschwenkachse um einen Schwenkwinkel zwischen 120° bis 150° nach hinten, insbesondere 140°; Arretieren des Außenschwenkarms (26a, 26b); Schwenken der Hauptschwenkarme (28a, 28b) um die Hauptarm-Schwenkachse nach oben, bis etwa ein Winkel von 75° bis 85° gegenüber der Hauptelement-Schwenkachse erreicht ist; Schwenken des Hauptelements (30) um die Hauptelement-Schwenkachse nach vorne, bis es auf einem Fixierungselement, das den Hauptelement-Schwenkarm in seiner Transportlage fixiert, zu liegen kommt; Arretieren des Hauptelement-Schwenkarms (28a, 28b) in Transportlage.

## Claims

1. Mowing device (10) comprising a central frame which is mounted on wheels (16a, 16b) and which can be used to couple a tractor to the device, said central frame supporting at least two mowing units (20a, 20b) which are coupled to the central frame (12) by means of a connection unit (24a, 24b) each, which central frame (12) extends - as viewed in a longitudinal direction thereof, i.e. in a central frame direction - orthogonal to the wheel axle, i.e. in the direction of direction of travel, wherein a connection unit (24a, 24b) comprises a main pivot arm (28a, 28b) and an outer pivot arm (26a, 26b), with said outer pivot arm (26a, 26b) being connected to said main pivot arm (28a, 28b) in a manner that will allow the main pivot arm (28a,28b) to be pivoted relative to the main pivot arm (28a, 28b) about an outer arm joint (34a, 34b) that defines an outer arm pivot axis (A_{AA}), said connection unit (24a, 24b) further comprises a mowing unit joint (32a, 32b) for connecting the mowing unit (20a, 20b) to the outer pivot arm (26a, 26b), which mowing unit joint (32a, 32b) is located at the end of the outer pivot arm (26a, 26b) that is remote from the outer arm joint (34a, 34b), said mowing unit joint (32a, 32b) defining a mowing unit pivot axis, which mowing unit pivot axis (A_{ME}) being perpendicular to said outer arm pivot axis (A_{AA}), **characterized in that** said connection unit (24a, 24b) comprises a main element (30) that connects the central frame (12) to the main pivot arm (28a, 28b), said main element (30) being connected to the central frame (12) by means of a main element joint that defines a main element pivot axis, wherein the main element pivot axis (A_{HE}) is parallel to the wheel axle, wherein the main element (30) pivotably connects the main pivot arm (28a, 28b) to the central frame (12) in such a manner that the main pivot arm (28a, 28b) is mounted on the main element (30) so as to be pivotable about a main arm pivot axis (A_{HA}), with the result that the main arm pivot axis (A_{HA}) extends perpendicular to the main element pivot axis (A_{HE}) and perpendicular to the outer arm pivot axis (A_{AA}), with the outer arm pivot axis (A_{AA}) also extending perpendicular to the main arm pivot axis (A_{HA}).

2. Mowing device according to claim 1, **characterized in that** two first connection units (24a, 24b) are mounted opposite one another on either side of the central frame (12).

3. Mowing device according to claim 2, **characterized in that** the two first connection units comprise a common main element, or **in that** two main elements of the two first connection units are coupled together.

4. Mowing device according to claim 1, **characterized in that** the width of the mowing unit (20a, 20b) is smaller than twice the length of the outer pivot arm (26a, 26b) of the first connection unit.

5. Mowing device according to claim 2, **characterized in that** two first mowing units are provided, which are connected to the central frame via two first connection units, and **in that** two second mowing units are provided, which are connected to the central frame via two opposite second connection units (40a, 40b), with the second connection unit comprising a lateral pivot arm (42a, 42b) which is connected, via a mowing unit joint, to a second mowing unit which is pivotable relative to the lateral pivot arm about a mowing unit pivot axis (A_{MEV}) that extends perpendicular to the wheel axle (A_{R}).

6. Mowing device according to claim 5, **characterized in that** in a rear section of the central frame (12), two rear first mowing units (20a, 20b) are connected to the central frame (12) via two first connection units, with two front second mowing units being connected to the central frame in front of the rear mowing units via one second connection unit each.

7. Mowing device according to one of claims 5 or 6 above, **characterized in that** the second connection unit comprises a main element and a lateral pivot arm, with the main element being connected to the central frame via a main element joint that has a main element pivot axis parallel to the wheel axle, and with the lateral arm being connected to the main element via a lateral arm joint, said lateral arm joint defining a pivot axis that is perpendicular to the wheel axle (A_{R}).

8. Mowing device according to any one of claims 5 to 7 above, **characterized in that** the distance between the main element pivot axis (A_{HE}) of the first connection unit and the main element pivot axis (A_{HEV}) of the second connection unit is longer than the length of the main arm (28a, 28b).

9. Mowing device according to any one of the preceding claims, **characterized in that** the main element (30) of the first connection unit (24a, 24b) is connected to the central frame (12) via at least one cylinder, in particular two cylinders or a two-part hydraulic cylinder, so as to enable the main element to be pivoted in at least two stages.

10. Mowing device according to any one of claims 5 to 9 above, **characterized in that** the wheels supporting the central frame are located between the first connection units and second connection units.

11. Mowing device according to any one of claims 2 to 10 above, **characterized in that** the main element (30) of the first connection unit is connected to the central frame via a second cylinder so as to enable the main element to be tilted for adjusting the cutting height.

12. Mowing device according to any one of claims 5 to 11 above, **characterized in that** the main element of the first connection element is connected to the second main element of the second connection element in such a way that the main elements are pivoted together, in particular by a second cylinder.

13. Method for bringing a mowing device according to any one of claims 1 to 12 above from a working position thereof into a transport position thereof, comprising the following steps:
Pivoting the main pivot arm (28a, 28b) upward about the main arm pivot axis by a pivot angle of between 10° and 20°;
pivoting the main element (30) forward about the main element pivot axis by a pivot angle of between 10° and 20°, in particular 15°;
pivoting the outer pivot arm (26a, 26b), together with the mowing unit (20a, 20b), backward about the outer pivot axis by a pivot angle between of between 120° and 150°, in particular 140°;
locking the outer pivot arm (26a, 26b) in position;
pivoting the main pivot arms (28a, 28b) upward about the main arm pivot axis until an angle of between approximately 75° and 85° relative to the main element pivot axis has been reached;
pivoting the main element (30) forward about the main element pivot axis until it comes to lie on a fixing element that fixes the main element pivot arm in its transport position;
locking the main element pivot arm (28a, 28b) in the transport position.

## Revendications

1. Dispositif de fauchage (10), comprenant un cadre central porté par des roues (16a, 16b), par l'intermédiaire duquel un tracteur peut être attelé, dans lequel le cadre central porte au moins deux unités de fauchage (20a, 20b), qui sont articulées sur le cadre central (12) par l'intermédiaire de respectivement une unité de raccordement (24a, 24b), dans lequel le cadre central (12) s'étend dans sa direction longitudinale, c'est à dire une direction de cadre central, perpendiculairement à l'axe de roue, c'est à dire dans le sens de marche, dans lequel une unité de raccordement (24a, 24b) comprend un bras pivotant principal (28a, 28b) et un bras pivotant extérieur (26a, 26b), dans lequel le bras pivotant extérieur (26a, 26b) est relié au bras pivotant principal (28a, 28b) de telle sorte que celui-ci peut pivoter par rapport au bras pivotant principal (28a, 28b) autour d'une articulation de bras extérieure (34a, 34b), qui définit un axe de pivotement de bras extérieur (A_{AA}), l'unité de raccordement (24a, 24b) comprend en outre une articulation d'unité de fauchage (32a, 32b) pour le raccordement de l'unité de fauchage (20a, 20b) au bras pivotant extérieur (26a, 26b), l'articulation d'unité de fauchage (32a, 32b) étant disposée à l'extrémité du bras pivotant extérieur (26a, 26b) espacée de l'articulation de bras extérieure (34a, 34b), l'articulation d'unité de fauchage (32a, 32b) définissant un axe de pivotement d'unité de fauchage, l'axe de pivotement d'unité de fauchage (A_{ME}) se situant transversalement par rapport à l'axe de pivotement de bras extérieur (A_{AA}), **caractérisé en ce que** l'unité de raccordement (24a, 24b) comprend un élément principal (30), qui relie le cadre central (12) au bras pivotant principal (28a, 28b), l'élément principal (30) étant relié au cadre central (12) par l'intermédiaire d'une articulation d'élément principal, qui définit un axe de pivotement d'élément principal, l'axe de pivotement d'élément principal (A_{HE}), se situant parallèlement à l'axe de roue, l'élément principal (30) reliant le bras pivotant principal (28a, 28b) au cadre central de manière pivotante, de telle sorte que le bras pivotant principal (28a, 28b) est monté sur l'élément principal (30) de manière à pouvoir pivoter autour d'un axe de pivotement de bras principal (A_{HA}), de sorte que l'axe de pivotement de bras principal (A_{HA}) se situe transversalement par rapport à l'axe de pivotement d'élément principal (A_{HE}) et transversalement par rapport à l'axe de pivotement de bras extérieur (A_{AA}), l'axe de pivotement de bras extérieur (A_{AA}) se situant également transversalement par rapport à l'axe de pivotement de bras principal (A_{HA}).

2. Dispositif de fauchage selon la revendication 1, **caractérisé en ce que** deux premières unités de raccordement (24a, 24b) sont raccordées au cadre central (12) des deux côtés de manière opposée.

3. Dispositif de fauchage selon la revendication 2, **caractérisé en ce que** les deux premières unités de raccordement comprennent un élément principal commun, ou deux éléments principaux des deux premières unités de raccordement sont accouplées.

4. Dispositif de fauchage selon la revendication 1, **caractérisé en ce que** la largeur de l'unité de fauchage (20a, 20b) est inférieure à deux fois la longueur du bras pivotant extérieur (26a, 26b) de la première unité de raccordement.

5. Dispositif de fauchage selon la revendication 2, **caractérisé en ce que** deux premières unités de fauchage sont prévues, qui sont reliées au cadre central par l'intermédiaire de deux premières unités de raccordement, et que deux deuxièmes unités de fauchage sont prévues, qui sont reliées au cadre central par l'intermédiaire de deux deuxièmes unités de raccordement (40a, 40b) opposées, la deuxième unité de raccordement comprenant un bras pivotant latéral (42a, 42b), qui, par l'intermédiaire d'une articulation d'unité de fauchage, est relié à la deuxième unité de fauchage qui peut pivoter par rapport au bras pivotant latéral autour d'un axe de pivotement d'unité de fauchage (A_{MEV}) s'étendant transversalement par rapport à l'axe de roue (A_{R}).

6. Dispositif de fauchage selon la revendication 5, **caractérisé en ce que**, dans une partie arrière du cadre central (12), deux premières unités de fauchage (20a, 20b) arrière sont reliées au cadre central (12) par l'intermédiaire de deux premières unités de raccordement, dans lequel, devant les unités de fauchage arrière, deux deuxièmes unités de fauchage avant sont reliées au cadre central par l'intermédiaire de respectivement une deuxième unité de raccordement.

7. Dispositif de fauchage selon la revendication 5 ou 6, **caractérisé en ce que** la deuxième unité de raccordement comprend un élément principal, et un bras pivotant latéral, l'élément principal étant raccordé au cadre central par l'intermédiaire d'une articulation d'élément principal, qui présente un axe de pivotement d'élément principal parallèle à l'axe de roue et le bras latéral est raccordé à l'élément principal par l'intermédiaire d'une articulation de bras latéral, l'articulation de bras latéral définissant un axe de pivotement, qui se situe transversalement par rapport à l'axe de roue (A_{R}).

8. Dispositif de fauchage selon l'une quelconque des revendications précédentes 5 à 7, **caractérisé en ce que** la distance entre l'axe de pivotement d'élément principal (A_{HE}) de la première unité de raccordement et l'axe de pivotement d'élément principal (A_{HEV}) de la deuxième unité de raccordement est plus grande que la longueur du bras principal (28a, 28b).

9. Dispositif de fauchage selon l'une quelconque des revendications précédentes, **caractérisé en ce que** l'élément principal (30) de la première unité de raccordement (24a, 24b) est relié au cadre central (12) par l'intermédiaire d'au moins un cylindre, en particulier de deux cylindres ou d'un cylindre hydraulique double, de sorte qu'un pivotement au moins à deux paliers de l'élément principal est possible.

10. Dispositif de fauchage selon l'une quelconque des revendications 5 à 9, **caractérisé en ce que** les roues qui portent le cadre central se situent entre les premières unités de raccordement et deuxièmes unités de raccordement.

11. Dispositif de fauchage selon l'une quelconque des revendications précédentes 2 à 10, **caractérisé en ce que** l'élément principal (30) de la première unité de raccordement est reliée au cadre central par l'intermédiaire d'un deuxième cylindre, de sorte qu'une inclinaison de l'élément principal pour adapter la hauteur de coupe est permise.

12. Dispositif de fauchage selon l'une quelconque des revendications précédentes 5 à 11, **caractérisé en ce que** l'élément principal du premier élément de raccordement est relié au deuxième élément principal du deuxième élément de raccordement, de telle sorte que les éléments principaux sont amenés à pivoter conjointement, en particulier par un deuxième cylindre.

13. Procédé pour amener un dispositif de fauchage selon l'une quelconque des revendications précédentes 1 à 12 d'une position de travail dans une position de transport, comprenant les étapes suivantes : le pivotement du bras pivotant principal (28a, 28b) autour de l'axe de pivotement de bras principal vers le haut selon un angle de pivotement compris entre 10° et 20° ; le pivotement de l'élément principal (30) autour de l'axe de pivotement d'élément principal selon un angle de pivotement compris entre 10° et 20°, en particulier de 15°, vers l'avant ; le pivotement du bras pivotant extérieur (26a, 26b) avec l'unité de fauchage (20a, 20b) autour de l'axe de pivotement extérieur selon un angle de pivotement compris entre 120° et 150°, vers l'arrière en particulier de 140°; l'arrêt du bras pivotant extérieur (26a, 26b) ; le pivotement des bras pivotants principaux (28a, 28b) autour de l'axe de pivotement de bras principal vers le haut, jusqu'à ce qu'un angle d'environ 75° à 85° soit atteint par rapport à l'axe de pivotement d'élément principal ; le pivotement de l'élément principal (30) autour de l'axe de pivotement d'élément principal vers l'avant, jusqu'à ce qu'il vienne se situer sur un élément de fixation, qui fixe le bras pivotant d'élément principal dans sa position de transport ; l'arrêt du bras pivotant d'élément principal (28a, 28b) dans la position de transport.
